Europäisches Patentamt

European Patent Office

Office européen des brevets

(19)

(11) Numéro de publication: **0 317 682 B1**

(12) **FASCICULE DE BREVET EUROPEEN**

(45) Date de publication de fascicule du brevet: **29.04.92**　(51) Int. Cl.⁵: **B23B 31/117**, B23B 31/02

(21) Numéro de dépôt: **87440086.4**

(22) Date de dépôt: **21.12.87**

(54) **Dispositif de montage à queue conique, en particulier au cône 7/24e, à application cône et face pour attachements, porte-outils et outils.**

(30) Priorité: **23.11.87 FR 8716604**

(43) Date de publication de la demande:
**31.05.89 Bulletin 89/22**

(45) Mention de la délivrance du brevet:
**29.04.92 Bulletin 92/18**

(84) Etats contractants désignés:
**AT BE CH DE ES FR GB GR IT LI LU NL SE**

(56) Documents cités:
EP-A- 0 204 671　　WO-A-86/04842
DE-A- 3 008 189　　DE-A- 3 436 733
DE-U- 8 715 314　　FR-A- 2 313 164
US-A- 2 684 249

(73) Titulaire: **Pfalzgraf, Emile**
**7, rue de Neuwiller**
**F-67330 Bouxwiller(FR)**

(72) Inventeur: **Pfalzgraf, Emile**
**7, rue de Neuwiller**
**F-67330 Bouxwiller(FR)**

(74) Mandataire: **Nuss, Pierre**
**10, rue Jacques Kablé**
**F-67000 Strasbourg(FR)**

Rank Xerox (UK) Business Services
(−/2.18/2.0)

# Description

La présente invention concerne le domaine des accessoires de machines-outils, à commande numérique, centres d'usinage, cellules et ateliers flexibles, et a pour objet un dispositif de montage à queue conique, en particulier au cône 7/24$^e$, à application cône et face pour attachements, porte-outils et outils, destiné à de telles machines avec changeur automatique ou manuel d'outils. Un tel dispositif selon le préambule de la revendication 1 est décrit par exemple dans le document DE-A-3436733.

Actuellement la fixation ou le montage d'un attachement d'outils ou d'outillages dans les broches de machines à fraiser, à aléser, à commande numérique, de centres d'usinage ou de cellules et d'ateliers flexibles, est généralement réalisée au moyen de queues coniques dont la conicité la plus courante est de 7/24$^e$. Ces montage et fixation étaient jusqu'à ce jour satisfaisants et le sont encore actuellement pour certaines opérations.

L'avènement des centres d'usinage au cône 7/24$^e$, présentant la plupart du temps un arrière tronqué et une collerette spéciale pour un changement automatique des outils, a entraîné une modification du cône 7/24$^e$ classique avec collerette simple et filetage arrière pour la fixation par tirant fileté.

La majorité des broches de machines construites actuellement sont prévues pour le montage d'outils présentant des cônes 7/24$^e$ et des collerettes correspondant aux normes usuelles, seules subsistant encore quelques machines avec des collerettes bien spécifiques à certains constructeurs.

Le type de fixation connu, décrit plus haut, est encore satisfaisant pour certaines applications, mais, du fait de l'augmentation de puissance et de performance importante des machines et centres d'usinage, ainsi que des développements très importants réalisés dans les plaquettes et outils coupants, la fixation des cônes dans les broches n'est plus adaptée aux progrès réalisés par les machines et aux performances des outils et constitue donc un handicap important, la puissance développée par les machines et les forces résultantes pouvant être encaissées par les outils n'étant pas transmissibles au niveau du cône.

En effet, le point critique et la faiblesse des fixations actuelles se situent le plus souvent à la sortie de broche, qui est un point affaiblissant tous les porte-outils ou outils, ces derniers devant respecter un diamètre spécifique de l'outil, qui est le grand diamètre de l'extrémité du cône relié par une portion cylindrique de faible longueur à la collerette. Le même problème se pose également, mais de façon moins cruciale, pour la fixation d'outils au cône 7/24$^e$ sur des tours.

Par ailleurs, il a été proposé de réaliser la fixation d'outils au moyen d'une queue cylindrique avec application contre la face avant de la broche. Ce mode de réalisation permet, certes, de résoudre le problème du contact parfait entre les surfaces mais nécessite une modification des broches des machines. En outre, le poids de l'outil, important dans certains cas, risque de modifier son alignement par rapport à l'axe de la broche et le positionnement du changeur d'outils doit s'effectuer dans des tolérances extrêmement serrées en tous sens, afin de permettre un alignement parfait de l'axe de la broche et du porte-outils.

Il a également été proposé, dans le cas où de hautes performances devaient être réalisées, pour obtenir une application simultanée du cône et de la face de la broche, d'exécuter, au moyen de gabarits spécifiques à chaque broche, des cônes standards monoblocs. Un tel mode de réalisation entraîne, cependant, des prix de revient extrêmement élevés et nécessite des tolérances de fabrication qui ne peuvent être tenues pour une production en série. En outre, les outils ainsi obtenus sont absolument spécifiques à une broche donnée et ne peuvent en aucun cas être interchangeables avec des outils affectés à d'autres broches donc à d'autres machines. Ce mode de réalisation est donc uniquement valable pour répondre à des problèmes spécifiques.

La présente invention a pour but de pallier ces inconvénients.

Elle a, en effet, pour objet, un dispositif de montage à queue conique, en particulier au cône 7/24$^e$, à application cône et face pour attachements, porte-outils et outils, caractérisé en ce qu'il est essentiellement constitué par un cône d'introduction dans la broche, par une partie avant centrée dans le cône et pourvue de la collerette d'application contre la face de la broche, par une tirette d'assemblage du cône et de la partie avant, par un ensemble élastique de pression du cône dans la broche en position de verrouillage, monté en compression entre le cône et la partie avant, et par un moyen de réglage dudit ensemble de pression.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

la figure 1 est une vue en élévation latérale et en coupe du dispositif conforme à l'invention ;

la figure 2 est une vue partielle en coupe représentant la tirette en position de blocage du dispositif ;

les figures 3 à 7 sont des vues en élévation latérales, partiellement en coupe, de modes de réalisation possibles de la partie avant centrée dans le cône ;

la figure 8 est une vue analogue à la figure 1 d'une variante de réalisation de l'invention ;

la figure 9 est une vue en élévation latérale et en coupe présentant le dispositif appliqué à un porte-outil pour tours et centres de tournage ;

la figure 10 est une vue partielle en coupe suivant A-A de la figure 9 ;

la figure 11 est une vue en coupe suivant B-B de la figure 9 ;

la figure 12 est une vue analogue à celle de la figure 9 d'une variante de réalisation de l'application du dispositif à un porte-outil pour tours et centres de tournage, et

la figure 13 est une vue partielle en coupe suivant A-A de la figure 12.

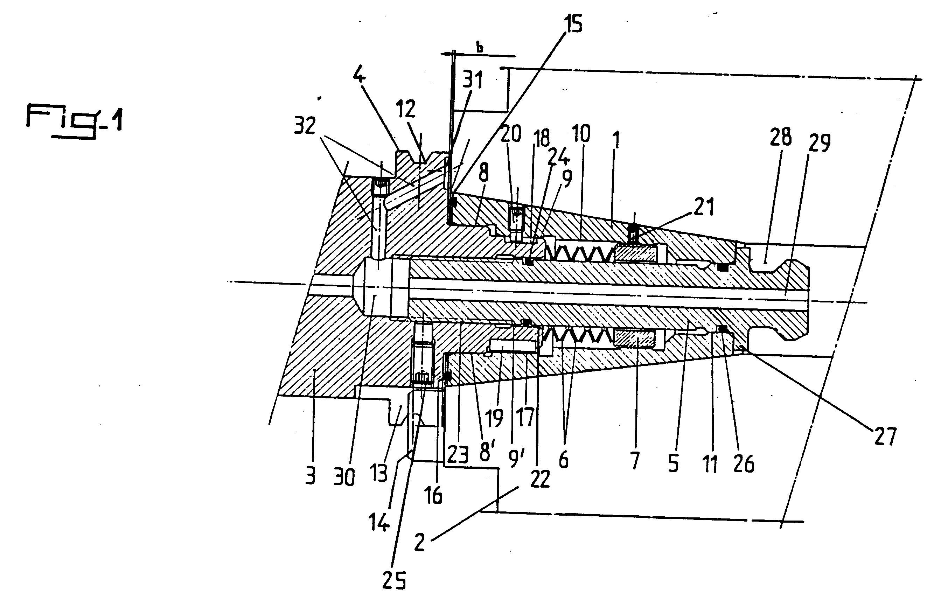

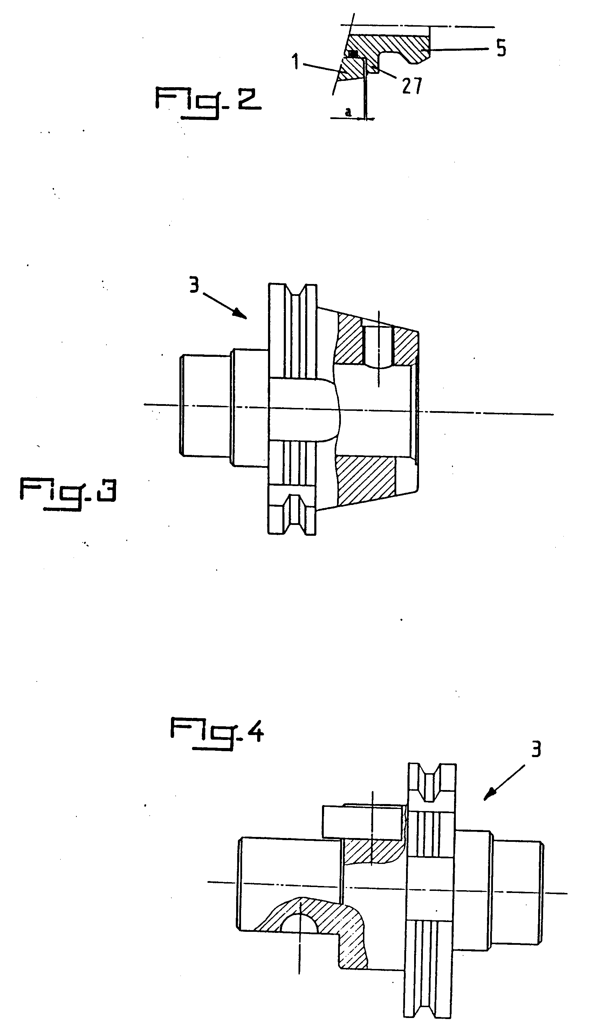

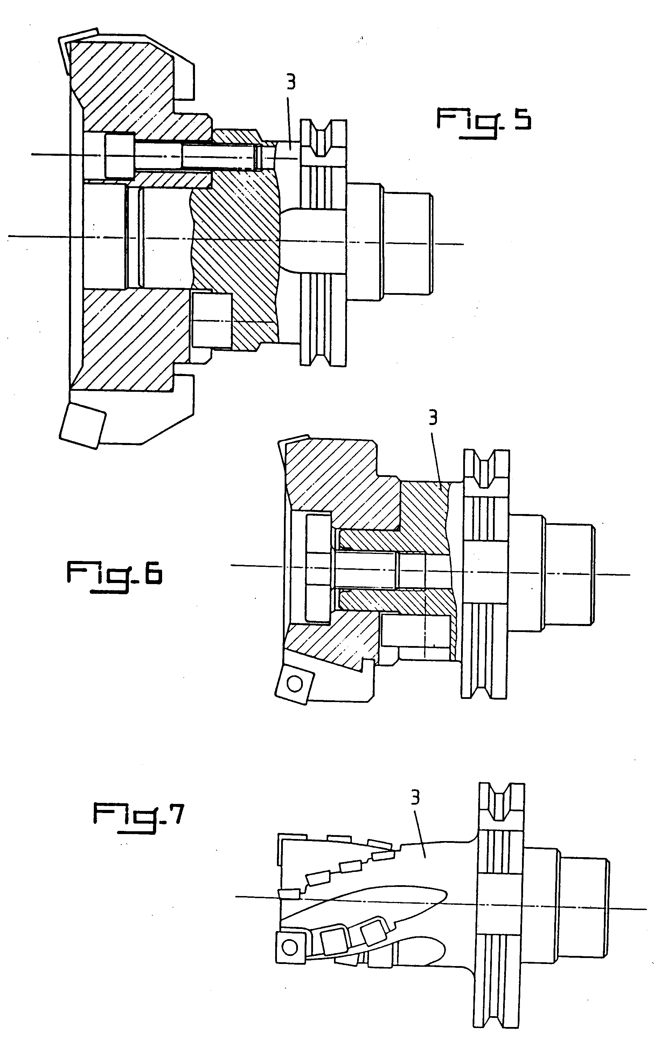

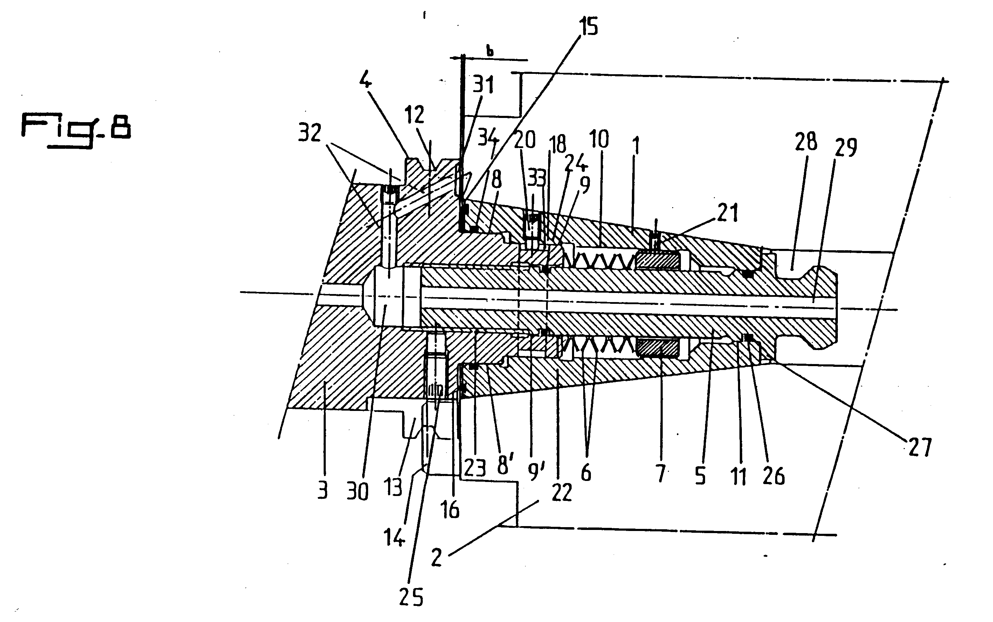

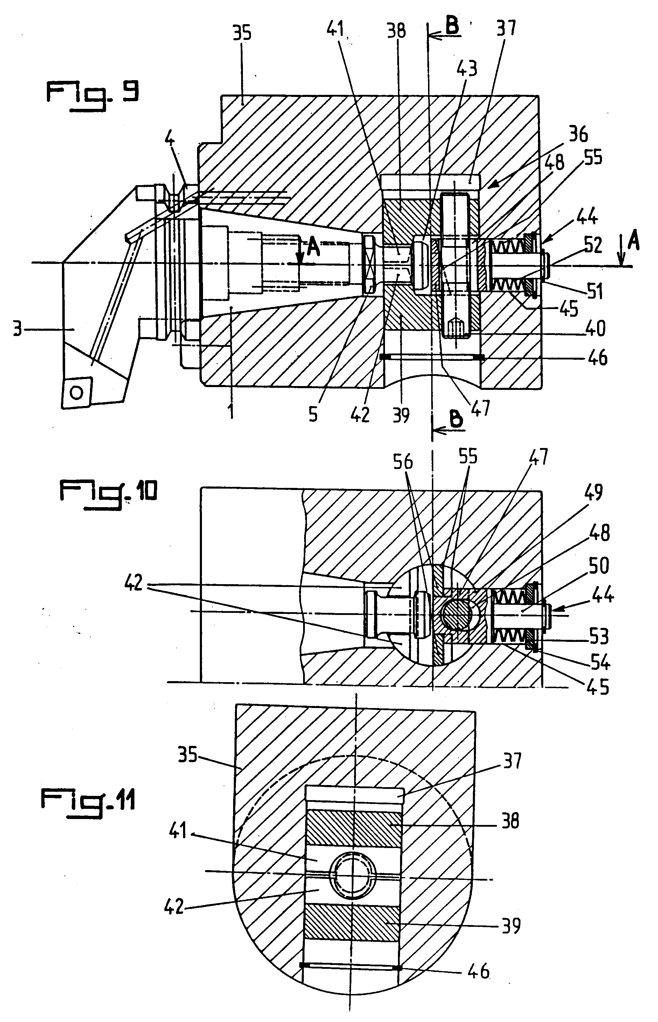

Conformément à l'invention et comme le montre plus particulièrement, à titre d'exemple, la figure 1 des dessins annexés, le dispositif de montage à queue conique en particulier au cône 7/24e, à application cône et face pour attachements, porte-outils et outils, est essentiellement constitué par un cône 1 d'introduction dans la broche 2, par une partie avant 3 centrée dans le cône 1 et pourvue de la collerette 4 d'application contre la face de la broche 2, par une tirette 5 d'assemblage du cône 1 et de la partie avant 3, un ensemble élastique 6 de pression du cône 1 dans la broche 2 en position de verrouillage étant monté en compression entre ledit cône 1 et la partie avant 3, et par un moyen 7 de réglage dudit ensemble de pression.

Le cône 1 présente une longueur réduite de quelques dixièmes de millimètres des deux côtés par rapport aux cônes existants et est pourvu de deux alésages concentriques 8 et 9 de centrage de la partie avant 3 d'un alésage 10, d'un diamètre inférieur à celui de l'alésage 9, destiné au logement de l'ensemble élastique 6, qui s'appuie à l'extrémité opposée à l'alésage 9 sur le moyen 7 de réglage logé au fond dudit alésage 10, ce dernier étant prolongé par un alésage 11 débouchant à l'extrémité opposée du cône 1 et servant au guidage de la tirette 5, qui est munie à ce niveau d'un joint torique 26 et qui s'appuie sur la face arrière du cône 1 au moyen d'un épaulement 27, et la face du cône 1 tournée vers la collerette 4 de la partie avant 3 est pourvue d'une gorge circulaire 15 de logement d'un joint torique 16.

La longueur du cône 1 réduit de quelques dixièmes de millimètres par rapport aux cônes existants a pour effet quer le cône 1, fixé dans la broche 2 de la machine, présente sa face avant légèrement en retrait de la face avant de la broche 2. En outre, lorsque le cône 1 est en place, sa face arrière est également légèrement plus près de la face avant de la broche 2 par rapport aux cônes connus.

La partie avant 3, pourvue de la collerette 4, qui est plus large que les collerettes existantes, et qui réduit, de ce fait, la longueur de la portion cylindrique de raccordement à la collerette, entraînant une réduction de la distance séparant la face arrière de la collerette à la face avant d'application contre la face de la broche 2, est centrée dans le cône 1 au moyen de deux parties cylindriques concentriques 8' et 9' pénétrant respectivement dans les alésages correspondants 8 et 9 du cône 1 et est serrée dans ledit cône 1 au moyen de la tirette 5 contre l'action de l'ensemble élastique 6, et la collerette 4 est munie en son milieu d'une gorge périphérique en V 12 de réception du bras d'un dispositif de changement d'outils. La collerette 4 est pourvue, en outre, de deux rainures 13 de réception des tenons d'entraînement 14 de la broche.

Les alésages 8 et 9 du cône 1, ainsi que les parties cylindriques concentriques 8' et 9' présentent des tolérances serrées permettant, toutefois, un léger déplacement axial. La collerette 4 est destinée à permettre un changement automatique du dispositif sur tous types de machines au moyen d'un bras changeur ou de tout autre dispositif.

Bien entendu, le dispositif selon l'invention est également utilisable pour des machines sans changeur, c'est-à-dire avec montage manuel.

La partie cylindrique 9' de la partie avant 3 est munie, en outre, de deux rainures 17 et 18 de réception, d'une part, d'une clavette ou goupille cylindrique 19 de solidarisation en rotation entre le cône 1 et la partie 3, pénétrant dans une rainure correspondante de l'alésage 9' du cône 1, et, d'autre part, d'une vis 20 de retenue de la partie avant 3.

L'ensemble élastique 6, logé dans l'alésage 10 est avantageusement réalisé par un empilage de rondelles Belleville, par un ressort à boudin, par plusieurs ressorts s'étendant parallèlement dans la chambre annulaire délimitée par l'alésage 10 et par la tirette 5, ou encore par un moyen hydraulique ou pneumatique ou par tout autre dispositif élastique, la force de compression de cet ensemble 6 étant réglée par l'intermédiaire du moyen 7 qui est avantageusement sous forme d'un manchon fileté coopérant avec un taraudage du fond de l'alésage 10, ce manchon étant bloqué en position de service au moyen d'une vis de pression 21. Le moyen 7 permet un réglage précis de la compression de l'ensemble 6, la vis de pression 21 assurant le maintien du réglage.

La vis 20 de retenue de la partie avant 3, coopérant avec la rainure 18 de la partie cylindrique 9' de ladite partie 3, est destinée à éviter un démontage accidentel de la partie 3 du cône 1 lors d'un changement éventuel de la tirette 5 sous l'effet de la pression exercée continuellement par l'ensemble 6.

La partie avant 3 est munie, en outre, de deux alésages concentriques 22 et 23 dont l'un, 23, est taraudé et est destiné à la réception de l'extrémité filetée de la tirette 5, l'autre alésage 22 étant lisse et coopérant avec un joint torique 24 logé dans une gorge circulaire correspondante de ladite tirette 5, qui est bloquée en position de service du dispositif par l'intermédiaire d'une vis radiale 25 pénétrant dans la partie avant 3 au niveau de l'une des rainures 13 de réception des tenons d'entraînement 14 de la broche 2. Cette vis 25 permet donc de réaliser un blocage de la tirette 5, tant en profondeur de pénétration dans la partie 3 qu'en rotation.

La partie avant 3 peut être réalisée pour le montage de différents éléments tels que fraises, tous systèmes modulaires existants, mâles ou femelles, tourteaux, barres d'alésage, têtes à aléser, outils spéciaux, ainsi que tous dispositifs pouvant être montés à l'avant d'une broche de machine à fraiser, de centre d'usinage, de cellule ou d'atelier flexible, pouvant recevoir un cône 7/24$^e$ ou autre.

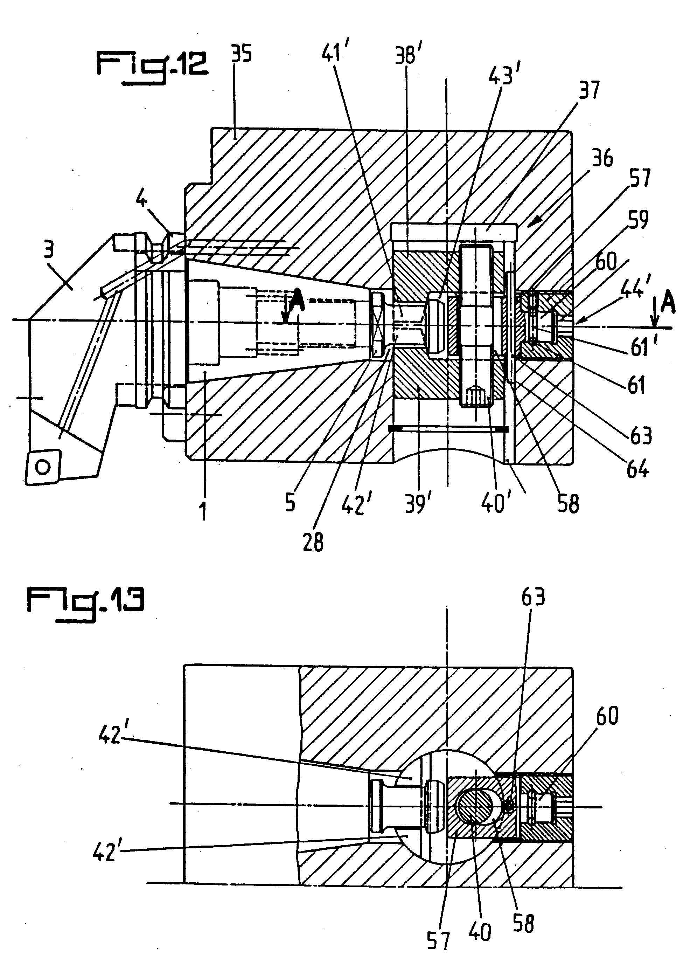

En position de montage du dispositif conforme à l'invention dans la broche 2, avant serrage par le tirant de la machine, il existe entre la face avant de la broche 2 et la face arrière de la collerette 4 un espace b réglable par serrage de la partie 3 dans le cône 1 au moyen de la tirette 5 contre l'action de l'ensemble 6 (figure 1). Cet espace 2 est reporté, après fixation au moyen de la tirette 5, par serrage par le tirant de la machine, entre l'épaulement 27 et la face correspondante du cône 1 pour former l'espace a (figure 2). Lors de cette fixation, en effet, la tirette 5, par l'action du tirant de la machine, tire la partie avant 3, contre l'action de l'ensemble 6, en application, par la face arrière de la collerette 4, contre la broche 2, la réaction de compression de l'ensemble 6 ayant pour conséquence une pression d'application supplémentaire du cône 1 dans son logement dans la broche 2.

Selon une variante de réalisation de l'invention, non représentée aux dessins annexés, la tirette 5 peut être munie à sa partie arrière, au lieu du profil de préhension 28, d'une partie cylindrique pourvue d'un taraudage, pour une fixation par tirant fileté.

De manière connue, le dispositif conforme à l'invention peut être muni, soit de dispositifs de lubrification, par l'extérieur de la broche, existants, nécessitant un appareil de lubrification spécifique, soit d'un circuit de lubrification passant par la tirette 5 sous forme d'un perçage axial 29 amenant le lubrifiant dans un dégagement 30 communiquant avec des canaux ou ouvertures débouchant près de l'outil de coupe, soit d'une arrivée de lubrifiant par la face avant de la broche 2 coopérant avec la face correspondante de la collerette 4, par exemple au moyen de deux chambrages 31 diamétralement opposés de ladite collerette 4, ces chambrages 31 communiquant au moyen de canaux 32 avec le dégagement 30 pour rejoindre de la manière décrite plus haut l'outil de coupe. Bien entendu, dans ce dernier cas, la tirette 5 utilisée ne serait pas percée.

Les joints toriques 16, 24 et 26 sont destinés à éviter toute pénétration d'impuretés et d'huile de lubrification à l'intérieur du dispositif.

Le montage du dispositif conforme à l'invention s'effectue de la manière suivante :

Dans l'alésage 10 du cône 1 est inséré, par vissage, le moyen 7 de réglage de la compression de l'ensemble 6, qui est introduit à la suite et le joint torique 16 est inséré dans la gorge circulaire 15 de la face avant du cône 1, puis la partie avant 3 est introduite dans le cône 1 avec centrage de ses parties cylindriques 8' et 9' dans les alésages correspondants 8 et 9. Après mise en place des joints toriques 24 et 26 dans les logements correspondants sur la tirette 5, cette dernière est introduite par la face arrière du cône 1 et vissée dans la partie 3 par l'intermédiaire du taraudage 23 de celle-ci.

La tirette 5 est alors serrée jusqu'à obtention de l'épaisseur de l'espace b, pouvant être mesuré au moyen d'une cale, nécessaire par la suite au montage et au serrage du dispositif dans la broche 2 de la machine. La vis 20 est alors introduite dans la rainure 18 correspondante afin d'éviter tout démontage accidentel de l'ensemble formé par le cône 1 et la partie avant 3 en cas de dévissage de la tirette 5. Le positionnement de la vis 20 est toujours parfaitement assuré en face de la rainure 18 grâce à la coopération de la clavette ou goupille cylindrique 19 avec la rainure 17.

Par le montage conforme à l'invention, il est possible d'assurer, en position de fixation du dispositif, par le tirant de la machine, un placage de la collerette 4 contre la broche 2 et une application avec pression du cône 1 dans le cône de ladite broche 2. Ainsi, tout l'effort développé en cours d'usinage par la broche 2 est transmis grâce à l'application de la collerette 4 contre la broche 2 et à la pression d'application du cône 1 dans ladite broche 2 due à la traction sur la tirette 5 par le tirant de la machine, ainsi que par l'entraînement réalisé directement au moyen des tenons 14 de la broche 2 coopérant avec les rainures 13 de la collerette 4.

Cette application directe de la partie avant 3 sur la face avant de la broche 2 permet d'utiliser toute la puissance de la machine car tous les points faibles, engendrant en général des vibrations, ont été éliminés, le cône 1 ne servant plus que comme centrage de la partie 3, ce centrage étant complété par la coopération entre les surfaces 8, 9 et 8′, 9′, par l'intermédiaire de l'ensemble 6 et de la force de serrage du système de tirant de la machine.

Comme le montrent les figures 3 à 7 des dessins annexés, la partie avant 3 peut présenter des configurations très diverses.

Ainsi, la figure 3 représente un montage modulaire par un alésage, tout autre système modulaire pouvant cependant lui être substituer.

La figure 4 représente également un montage modulaire, mais de type mâle, également cité simplement à titre d'exemple non limitatif.

La figure 5 montre l'utilisation de la partie avant 3 comme support d'une fraise tourteau avec fixation au moyen de vis axiales périphériques. Dans ce cas également, un autre montage tel que, par exemple, par vis centrale avec centrage dans l'alésage de la fraise, tel que représenté à la figure 6, est possible. Dans un tel cas, l'ensemble obtenu peut présenter une plus faible longueur, en particulier en cas d'utilisation de tenons de fraise positionnés frontalement, comme représenté à la figure 5.

La figure 7 représente une fraise hérisson monobloc avec la partie 3. Il est également possible de fixer une telle fraise au moyen d'une vis et d'un centrage centraux.

La figure 8 représente une variante de réalisation de l'invention, dans laquelle la partie cylindrique 9′ de la partie avant 3 est munie d'une gorge circulaire 33 coopérant avec la vis 20 de retenue de la partie avant 3 dans le cône 1. Dans ce mode de réalisation, la gorge 33 est substituée aux rainures 17 et 18 et à la clavette ou goupille cylindrique 19.

Ainsi, en cas de montage de l'ensemble dans la broche de la machine avec un serrage par pression du cône 1 contre les parois du cône intérieur de la broche 2, une légère rotation de la pièce 3 à l'intérieur du cône 1 reste possible et permet un entraînement de la partie 3 au moyen des tenons d'entraînement 14 coopérant avec les rainures 13, le cône 1 assurant uniquement le centrage de la pièce 3 par rapport à la broche 2.

Selon une autre caractéristique de l'invention, l'alésage 8 du cône 1 est muni, en outre, d'une gorge cylindrique de logement d'un joint torique supplémentaire 34. Ce joint 34 permet d'assurer une étanchéité plus importante entre la partie 3 et le cône 1.

Les figures 9 et 12 représentent deux modes d'adaptation du dispositif conforme à l'invention à des porte-outils pour tours et centres de tournage.

A cet effet, conformément à un premier mode de réalisation de l'invention, suivant la figure 9, le dispositif est monté par son cône 1 dans une cassette de fixation 35 avec appui de sa collerette 4 contre la face avant de ladite cassette 35, qui est munie au niveau de la tirette 5 d'un moyen 36 de préhension et de serrage de l'extrémité de ladite tirette 5 monté dans un logement borgne 37 s'étendant perpendiculairement ou suivant un angle aigu par rapport à l'axe de la partie 3 et du cône 1 et muni près de son extrémité ouverte d'une bague élastique 46.

Le moyen 36 de préhension et de serrage de l'extrémité 5 est constitué par deux pistons 38 et 39 montés de manière coulissante dans le logement 37 et déplaçables en rapprochement ou en éloignement au moyen d'une vis 40 à filetages inversés, avec limitation du déplacement par l'intermédiaire de la bague élastique 46, les deux pistons 38 et 39 présentant, d'une part, sur leur côté tourné vers le cône 1 chacun une fourche 41, 42 destinée à s'engager dans le profil de préhension 28 de la tirette 5 et, formant, d'autre part, du côté opposé à la tirette 5, entre eux un évidement 43 de réception d'un dispositif 44 d'éjection du dispositif de montage à queue conique, ce dispositif 44 s'étendant, à une extrémité, autour de la vis 40 et, à son autre extrémité, dans un alésage 45 débouchant sur la face arrière de la cassette 35, dans l'axe du cône 1 et de la partie 3.

Conformément à une variante de réalisation de l'invention, non représentée aux dessins annexés, le déplacement en rapprochement ou en éloignement des pistons 38 et 39 dans le logement 37 peut également être réalisé au moyen d'une vis simple coopérant avec un taraudage de l'un des pistons 38 et s'appuyant par sa tête dans un chambrage de l'autre piston 39, l'extrémité libre de la tête de la vis butant, lors du desserrage de cette dernière, contre une bague élastique logée dans le chambrage au-dessus de la tête.

Le dispositif d'éjection 44 présente à son extrémité entourant la vis 40 une section carrée 47 muni d'un trou traversant oblong 48 de logement de la vis 40 et relié à une partie cylindrique 49 de guidage dans l'alésage 45 de la cassette 35, cette partie cylindrique 49 étant, d'une part, prolongée par une tige de section cylindrique 50 débouchant de l'alésage 45 et muni à ce niveau d'une bague élastique 51, et, d'autre part, chargée par un ressort 52 ou une série de rondelles Belleville agissant à son autre extrémité contre une rondelle d'appui 53 maintenue sur l'extrémité de l'alésage 45 au moyen d'une bague élastique 54.

A son extrémité libre, la section carrée 47 du dispositif d'éjection 44 présente, sur deux bords opposés, deux épaulements obliques 55 s'appuyant sur les ailes d'une fourche 56 inclinée de manière correspondante solidaire de l'un des pistons 38 ou 39 (du piston 39 dans le mode de réalisation représenté aux figures 9 et 10).

L'ensemble formé par les pistons 38 et 39 et par la vis 40 est monté de manière flottante dans le logement 37 et peut ainsi réaliser un auto-centrage par rapport à la tirette 5, la bague élastique 46 évitant leur sortie du logement 37. Par action sur la vis 40, il est possible de réaliser un déplacement des pistons 38 et 39 en sens opposé pour la préhension et le serrage de l'extrémité de la tirette 5 ou pour le desserrage de cette dernière, la bague élastique 46 limitant, en outre, l'ouverture des pistons 38 et 39.

Avant l'introduction du dispositif par l'intermédiaire du cône 1 dans la cassette 35 la vis 40 est manoeuvrée au moyen d'une clé dans le sens d'un écartement maximum des pistons 38 et 39 jusqu'à buter, l'un, 38, contre le fond du logement 37, et l'autre, 39, contre la bague 46. Dans cette position, le dispositif d'éjection 44 s'est déplacé jusqu'à arrivée en butée de la bague élastique 51 de sa tige 50 contre la rondelle d'appui 53. Le dispositif de montage conforme à l'invention peut alors être introduit dans la cassette 35 jusqu'à application du cône 1 contre la paroi intérieure de ladite cassette 35, puis la vis 40 est actionnée en sens inverse de manière à réaliser un rapprochement des pistons 38 et 39 entraînant une mise en prise des fourches 41 et 42 de ces derniers avec le profil de préhension 28 de la tirette 5, de sorte que cette dernière est tirée vers la face arrière de la cassette 35 afin de plaquer la collerette 4 contre la face avant de ladite cassette 35. Simultanément à ce mouvement, le dispositif 44 recule sous l'effet des ailes de la fourche inclinée 56 s'appuyant contre les épaulements obliques 55 de ce dernier. A la fin du serrage de la vis 40 un maintien efficace du cône 1 dans la cassette 35 est obtenu.

Le desserrage et l'éjection du dispositif de montage conforme à l'invention s'effectuent en réalisant la manoeuvre inverse de celle décrite ci-dessus pour le serrage, l'actionnement de la vis 40 en sens inverse ayant pour effet de dégager la tirette 5 des fourches 41, 42 des pistons 38 et 39. Le recul du piston 39 en direction de la bague 46 a pour effet de permettre un déplacement du dispositif 44 sous l'action du ressort 52 jusqu'à ce que l'extrémité libre de sa section carrée 47 bute contre la tirette 5, débloquant ainsi le cône 1. En cas de non déblocage du dispositif sous l'action du ressort 52, il reste toujours possible de réaliser ce déblocage par un coup de maillet sur l'extrémité libre de la tige 50.

Les figures 12 et 13 représentent une variante de réalisation de l'application du dispositif à un porte-outil pour tours ou centres de tournage selon les figures 9 à 11. Dans ce mode de réalisation, le piston 39′ du moyen de préhension 36 est dépourvu d'une fourche inclinée et le dispositif d'éjection 44′ est constitué par un piston 57 pénétrant dans l'évidement 43′ déterminé entre les pistons 38′ et 39′ et muni d'un trou oblong 58 de passage de la vis 40′ de manoeuvre des pistons 38′ et 39′, et par une vis 59 de manoeuvre du piston 57 coopérant avec un taraudage de la cassette 35 alignée dans l'axe du cône 1 et reliée en translation à une portion 60 de diamètre réduit du piston 57 par l'intermédiaire d'un chemin de billes 61 logé dans une gorge circulaire 61′ ladite vis 59 étant pourvue d'un polygone de manoeuvre en creux 62 et le piston 57 étant muni, près de son extrémité de liaison à la vis 59, d'une goupille transversale 63 s'étendant parallèlement à l'axe de la vis 40′ et dont les extrémités pénètrent dans une rainure longitudinale 64 du logement 37 de la cassette 35.

L'introduction du dispositif de montage dans la cassette 35 s'effectue, le piston 57 étant en position reculée en direction de la face arrière de ladite cassette 35, et la vis 40′ étant manoeuvrée dans le sens d'un écartement maximale des pistons 38′ et 39′. Après application du cône 1 contre la paroi intérieure de la cassette 35, la vis 40′ est manoeuvrée en sens inverse afin de rapprocher les pistons 38′ et 39′ pour tirer la tirette 5 afin d'appliquer la collerette 4 contre la face avant de la cassette 35, comme décrit précédemment au sujet des figures 9 à 11 ; ceci est également valable en ce qui concerne l'auto-centrage des pistons 38′ et 39′.

Pour effectuer le desserrage du dispositif, il suffit de manoeuvrer la vis 40′ de manière à écarter les pistons 38′ et 39′, puis de visser, au moyen d'une clé pénétrant dans le polygone de manoeuvre 62, la vis 59 de manoeuvre du piston 57 afin d'amener l'extrémité de ce dernier en contact avec la tirette 5 et de pousser sur cette dernière afin de chasser le cône 1 hors de la cassette 4. Après cette manoeuvre, la vis 59 doit être ramenée dans sa position de départ.

En cas d'oubli de manoeuvre inverse de la vis 59, il est prévu une sécurité constituée par la goupille transversale 63 qui est déplacée hors de sa rainure 64 du logement 37, lors du déplacement du piston 57, et qui se place entre les pistons 38′ et 39′, de sorte que lors d'une manoeuvre de ces derniers au moyen de la vis 40′ ils butent automatiquement contre la goupille 63.

Grâce au mode de réalisation suivant les figures 9 à 13, le dispositif conforme à l'invention est utilisable aussi bien pour le tournage que pour le fraisage en changement manuel ou automatique des porte-outils.

Les cassettes 35 représentées aux figures 9 à 13 sont prévues pour un serrage manuel de fixation d'un ensemble porte-outils, cependant d'autres systèmes de serrage pourraient être utilisés. Ainsi, dans le cas d'utilisation d'un système avec changement automatique, le dispositif de montage du cône et la tirette restent identiques, seul le dispositif manuel de serrage et d'éjection étant remplacé par un système hydraulique correspondant, de sorte que tous les porte-outils d'un centre de tournage peuvent être changés automatiquement de la même manière que ceux des centres de fraisage ou d'usinage. De même, il est également possible de prévoir sur un poste d'une tourelle un dispositif d'actionnement automatisé du système de serrage et de desserrage manuel.

Enfin, il est possible, après modification des tourelles, par les fabricants de machines-outils, de tours ou de centres de tournage, de prévoir dans les tourelles porte-outils, aux emplacements actuels des porte-outils présentant des alésages cylindriques, des alésages coniques au cône 7/24$^e$ pour la réception du dispositif conforme à l'invention, l'utilisateur pouvant alors disposer des mêmes porte-outils pour les centres de tournage et de fraisage.

Grâce à l'invention, il est possible de réaliser un dispositif de montage à queue conique, en particulier au cône 7/24$^e$, permettant une application cône et face, pour des attachements, des porte-outils et outils, sans nécessiter une modification des broches des machines existantes, donc utilisables sans frais de transformation supplémentaires, l'application de la face de la collerette contre la face de la broche de la machine s'effectuant sans nécessiter de tolérances serrées en longueur.

En outre, le dispositif conforme à l'invention peut être utilisé de manière interchangeable sur toute machine et peut équiper le magasin de la machine mélangé à des porte-outils standards. De même, l'utilisation de changeurs d'outils existants est possible ainsi que celle du système du mécanisme de serrage par tirette et tirant de la broche de la machine.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

**Revendications**

1. Dispositif de montage à queue conique, en particulier au cône 7/24$^e$, à application cône et face pour attachements, porte-outils et outils, constitué par un cône (1) d'introduction dans la broche (2), par une partie avant (3) centrée dans le cône (1) et pourvue de la collerette (4) d'application contre la face de la broche (2), par une tirette (5) d'assemblage du cône (1) et de la partie avant (3), caractérisé en ce qu'il comporte, en outre, un ensemble élastique (6) de pression du cône (1) dans la broche (2) en position de verrouillage, monté en compression entre le cône (1) et la partie avant (3), et un moyen (7) de réglage dudit ensemble de pression (6).

2. Dispositif, suivant la revendication 1, caractérisé en ce que le cône (1) présente une longueur réduite de quelques dixièmes de millimètres des deux côtés par rapport aux cônes existants et est pourvu de deux alésages concentriques (8 et 9) de centrage de la partie avant (3) d'un alésage (10), d'un diamètre inférieur à celui de l'alésage (9), destiné au logement de l'ensemble élastique (6), qui s'appuie à l'extrémité opposée à l'alésage (9) sur le moyen (7) de réglage logé au fond dudit alésage (10), ce dernier étant prolongé par un alésage (11) débouchant à l'extrémité opposée du cône (1) et servant au guidage de la tirette (5), qui est munie à ce niveau d'un joint torique (26) et qui s'appuie sur la face arrière du cône (1) au moyen d'un épaulement (27), et la face du cône (1) tournée vers la collerette (4) de la partie avant (3) est pourvue d'une gorge circulaire (15) de logement d'un joint torique (16).

3. Dispositif, suivant l'une quelconque des revendications 1 et 2, caractérisé en ce que la partie avant (3), pourvue de la collerette (4) d'application contre la face de la broche (2), est centrée dans le cône (1) au moyen de deux parties cylindriques concentriques (8' et 9') pénétrant respectivement dans les alésages correspondants (8 et 9) du cône (1) et est serrée dans ledit cône (1) au moyen de la tirette (5) contre l'action de l'ensemble élastique (6), et la collerette (4) est munie en son milieu d'une gorge périphérique en V (12) de réception du bras d'un dispositif de changement d'outils.

4. Dispositif, suivant l'une quelconque des revendications 1 à 3, caractérisé en ce que la partie cylindrique (9') de la partie avant (3) est munie, en outre, de deux rainures (17 et 18) de réception, d'une part, d'une clavette ou goupille cylindrique (19) de solidarisation en rotation entre le cône (1) et la partie (3), pénétrant dans une rainure correspondante de l'alésage (9') du cône (1), et, d'autre part, d'une vis (20) de retenue de la partie avant (3).

5. Dispositif, suivant l'une quelconque des revendications 1 et 2, caractérisé en ce que l'ensemble élastique (6), logé dans l'alésage (10) est avantageusement réalisé par un empilage de rondelles Belleville, par un ressort à boudin, par plusieurs ressorts s'étendant parallèlement dans la chambre annulaire délimitée par l'alésage (10) et par la tirette (5), ou encore par un moyen hydraulique ou pneumatique ou par tout autre dispositif élastique, la force de compression de cet ensemble (6) étant réglée par l'intermédiaire du moyen (7) qui est avantageusement sous forme d'un manchon fileté coopérant avec un taraudage du fond de l'alésage (10), ce manchon étant bloqué en position de service au moyen d'une vis de pression (21).

6. Dispositif, suivant l'une quelconque des revendications 1 à 4, caractérisé en ce que la partie avant (3) est munie, en outre, de deux alésages concentriques (22 et 23) dont l'un, (23), est taraudé et est destiné à la réception de l'extrémité filetée de la tirette (5), l'autre alésage (22) étant lisse et coopérant avec un joint torique (24) logé dans une gorge circulaire correspondante de ladite tirette (5), qui est bloquée en position de service du dispositif par l'intermédiaire d'une vis radiale (25) pénétrant dans la partie avant (3) au niveau de l'une des rainures (13) de réception des tenons d'entraînement (14) de la broche (2).

7. Dispositif, suivant l'une quelconque des revendications 1 à 3, 5 et 6, caractérisé en ce que la tirette (5) est munie à sa partie arrière, au lieu du profil de préhension (28), d'une partie cylindrique pourvue d'un taraudage, pour une fixation par tirant fileté.

8. Dispositif, suivant l'une quelconque des revendications 1 à 3, caractérisé en ce que la partie cylindrique (9') de la partie avant (3) est munie d'une gorge circulaire (33) coopérant avec la vis (20) de retenue de la partie avant (3) dans le cône (1).

9. Dispositif, suivant l'une quelconque des revendications 2 et 3, caractérisé en ce que l'alésage (8) du cône (1) est muni, en outre, d'une gorge cylindrique de logement d'un joint torique supplémentaire (34).

10. Dispositif, suivant l'une quelconque des revendications 1 à 9, caractérisé en ce qu'il est monté par son cône (1) dans une cassette de fixation (35) avec appui de sa collerette (4) contre la face avant de ladite cassette (35), qui est munie au niveau de la tirette (5) d'un moyen (36) de préhension et de serrage de l'extrémité de ladite tirette (5) monté dans un logement borgne (37) s'étendant perpendiculairement ou suivant un angle aigu par rapport à l'axe de la partie (3) et du cone (1) et muni près de son extrémité ouverte d'une bague élastique (46).

11. Dispositif, suivant la revendication 10, caractérisé en ce que le moyen (36) de préhension et de serrage de l'extrémité (5) est constitué par deux pistons (38 et 39) montés de manière coulissante dans le logement (37) et déplaçables en rapprochement ou en éloignement au moyen d'une vis (40) à filetages inversés, avec limitation du déplacement par l'intermédiaire de la bague élastique (46), les deux pistons (38 et 39) présentant, d'une part, sur leur côté tourné vers le cône (1) chacun une fourche (41, 42) destinée à s'engager dans le profil de préhension (28) de la tirette (5) et, formant, d'autre part, du côté opposé à la tirette (5), entre eux un évidement (43) de réception d'un dispositif (44) d'éjection du dispositif de montage à queue conique, ce dispositif (44) s'étendant, à une extrémité, autour de la vis (40) et, à son autre extrémité, dans un alésage (45) débouchant sur la face arrière de la cassette (35), dans l'axe du cône (1) et de la partie (3).

12. Dispositif, suivant la revendication 11, caractérisé en ce que le déplacement en rapprochement ou en éloignement des pistons (38 et 39) dans le logement (37) est réalisé au moyen d'une vis simple coopérant avec un taraudage de l'un des pistons (38) et s'appuyant par sa tête dans un chambrage de l'autre piston (39), une bague élastique formant butée pour l'extrémité libre de ladite tête dans le chambrage.

13. Dispositif, suivant la revendication 11, caractérisé en ce que le dispositif d'éjection (44) présente à son extrémité entourant la vis (40) une section carrée (47) muni d'un trou traversant oblong (48) de logement de la vis (40) et relié à une partie cylindrique (49) de guidage dans l'alésage (45) de la cassette (35), cette partie cylindrique (49) étant, d'une part, prolongée par une tige de section cylindrique (50) débouchant de l'alésage (45) et muni à ce niveau d'une bague élastique (51), et, d'autre part, chargée par un ressort (52) ou une série de rondelles Belleville agissant à son autre extrémité contre une rondelle d'appui (53) maintenue sur l'extrémité de l'alésage (45) au moyen d'une bague élastique (54).

14. Dispositif, suivant la revendication 13, caractérisé en ce que la section carrée (47) du dispositif d'éjection (44) présente, sur deux bords opposés, deux épaulements obliques (55) s'appuyant sur les ailes d'une fourche (56) inclinée de manière correspondante solidaire de l'un des pistons (38 ou 39).

**15.** Dispositif, suivant l'une quelconque des revendications 10 et 11, caractérisé en ce que le piston (39') du moyen de préhension (36) est dépourvu d'une fourche inclinée et le dispositif d'éjection (44') est constitué par un piston (57) pénétrant dans l'évidement (43') déterminé entre les pistons (38' et 39') et muni d'un trou oblong (58) de passage de la vis (40') de manoeuvre des pistons (38' et 39'), et par une vis (59) de manoeuvre du piston (57) coopérant avec un taraudage de la cassette (35) alignée dans l'axe du cône (1) et reliée en translation à une portion (60) de diamètre réduit du piston (57) par l'intermédiaire d'un chemin de billes (61) logé dans une gorge circulaire (61'), ladite vis (59) étant pourvue d'un polygone de manoeuvre en creux (62) et le piston (57) étant muni, près de son extrémité de liaison à la vis (59), d'une goupille transversale (63) s'étendant parallèlement à l'axe de la vis (40') et dont les extrémités pénètrent dans une rainure longitudinale (64) du logement (37) de la cassette (35).

**Claims**

**1.** Assembly device having a tapered shank, in particular a 7/24 taper, for taper and face application for attachments, tool holders and tools, essentially consisting of a taper (1) for introduction into the spindle (2), a front part (3) centered in the taper (1) and provided with the flange (4) for application against the face of the spindle (2), and a pull stud (5) for connecting the taper (1) and the front part (3), characterised in that it also comprises an elastic unit (6) for pressing the taper (1) in the spindle (2) in the locked position, which is fitted under compression between the taper (1) and the front part (3), and a means (7) for adjusting said pressure unit (6).

**2.** Device according to claim 1, characterised in that the taper (1) has a length which is reduced by several tenths of a millimetre on the two sides relative to existing tapers and is provided with two concentric bores (8 and 9) for centering the front part (3), a bore (10) having a diameter smaller than that of the bore (9), which is intended for accommodating the elastic unit (6) resting, at the end remote from the bore (9) on the adjusting means (7) accommodated at the bottom of said bore (10), this bore (10) being extended by said bore (11) opening at the opposite end of the taper (1) and serving to guide the pull stud (5) which is equipped, in this region, with an O-ring (26) and rests on the rear face of the taper (1) by means of a shoulder (27), and the face of the taper (1) turned toward the flange (4) of the front part (3) is provided with a circular groove (15) for accommodating an O-ring (16).

**3.** Device according to any one of claims 1 and 2, characterised in that the front part (3) provided with the flange (4) for application to the face of the spindle (2) is centred in the taper (1) by means of two concentric cylindrical parts (8' and 9') penetrating in the corresponding bores (8 and 9) respectively of the taper (1) and is locked in said taper (1) by the pull stud (5) against the action of the elastic unit (6), and the collar (4) is equipped in its centre with a V-shaped peripheral groove (12) for receiving the arm of a tool changing device.

**4.** Device according to any one of claims 1 to 3, characterised in that the cylindrical part (9') of the front part (3) is also equipped with two grooves (17 and 18) for receiving, on the one hand, a cylindrical key or pin (19) for rotational engagement between the taper (1) and the part (3), penetrating in a corresponding groove of the bore (9') of the taper (1), and, on the other hand, a screw (20) for holding the front part (3).

**5.** Device according to any one of claims 1 and 2, characterised in that the elastic unit (6) accommodated in the bore (10) is advantageously produced by a stack of Belleville washers, a coil spring, several springs extending in parallel in the annular chamber defined by the bore (10) and the pull stud (5) or again a hydraulic or pneumatic means or any other elastic device, the compressive force of this unit (6) being adjusted by the means (7) which is advantageously in the form of a screw-threaded sleeve mating with tapping in the bottom of the bore (10), this sleeve being locked in the operating position by means of a press screw (21).

**6.** Device according to any one of claims 1 to 4, characterised in that the front part (3) is also equipped with two concentric bores (22 and 23) of which one, (23), is tapped and is intended to receive the screw-threaded end of the pull stud (5), the other bore (22) being smooth and co-operating with an O-ring (24) accommodated in a corresponding circular groove of said pull means (5) which is locked in the operating position of the device by means of a radial screw (25) penetrating in the front portion (3) in the region of one of the furrows (13) for receiving the driving tenons (14) of the spindle (2).

7. Device according to any one of claims 1 to 3, 5 and 6, characterised in that the pull stud (5) is equipped, at its front part , not with the gripping profile (28), but with a cylindrical part provided with tapping for fixation by a screw-threaded tie rod.

8. Device according to any one of claims 1 to 3, characterised in that the cylindrical part (9') of the front part (3) is equipped with a circular groove (33) co-operating with the screw (20) for locking the front part (3) in the taper (1).

9. Device according to any one of claims 2 and 3, characterised in that the bore (8) of the taper (1) is also equipped with a cylindrical groove for accommodating an additional O-ring (34).

10. Device according to any one of claims 1 to 9, characterised in that it is fitted by its taper (1) in a fixing cassette (35) with its flange (4) resting against the front face of said cassette (35) which is equipped, in the region of the pull stud (5), with a means (36) for gripping and securing the end of said pull stud (5), the means (36) being fitted in a blind housing (37) extending perpendicularly or at an acute angle to the axis of the portion (3) and of the taper (1) and being equipped with an elastic ring (46) close to its open end.

11. Device according to claim 10, characterised in that the means (36) for gripping and securing the end (5) consists of two pistons (38 and 39) which are fitted in a sliding manner in the housing (37) and can be moved together or apart by means of a screw (40) having reversed threads, the movement being limited by the elastic ring (46) and the two pistons (38 and 39) on the one hand having, on their side turned toward the taper (1), a respective fork (41, 42) intended to engage in the profile (28) for gripping the pull stud (5) and, on the other hand, forming, on the side remote from the pull stud (5), a recess (43) between themselves for receiving a device (44) for ejecting the assembly device having a tapered shank, this device (44) extending, at one end, round the screw (40) and, at its other end, in a bore (45) opening at the rear face of the cassette (35) in the axis of the taper (1) and the part (3).

12. Device according to claim 11, characterised in that the movement together or apart of the pistons (38 and 39) in the housing (37) is carried out by means of a simple screw mating with tapping in one of the pistons (38) and resting with its head in a cavity in the other piston (39), an elastic ring forming an abutment for the free end of said head in the cavity.

13. Device according to claim 11, characterised in that the ejection device (44) has, at its end surrounding the screw (40), a square section (47) equipped with an oblong passage (48) for accommodating the screw (40) and connected to a cylindrical part (49) for guidance in the bore (45) of the cassette (35), this cylindrical part (49) on the one hand being extended by a cylindrical section rod (50) which emerges from the bore (45) and is equipped in this region with an elastic ring (51) and, on the other hand, being loaded by a spring (52) or a series of Belleville washers acting at its other end against a supporting washer (53) held on the end of the bore (45) by means of an elastic ring (54).

14. Device according to claim 13, characterised in that the square section (47) of the ejection device (44) has, on two opposing sides, two oblique shoulders (55) resting on the wings of a fork (56) which is correspondingly inclined and is integral with one of the pistons (38 or 39).

15. Device according to any one of claims 10 and 11, characterised in that the piston (39') of the gripping means (36) is free from an inclined fork and the ejection device (44') consists of a piston (57) penetrating in the recess (43') defined between the pistons (38' and 39') and equipped with an oblong hole (58) for passage of the screw (40') for working the pistons (38' and 39'), and of a screw (59) for manoeuvring the piston (57) co-operating with tapping in the cassette (35) aligned in the axis of the taper (1) and connected by translation to a reduced diameter part (60) of the piston (57) by a ball track (61) housed in a circular groove (61'), said screw (59) being provided with a polygonal working socket (62) and the piston (57) being equipped, close to the end where it is connected to the screw (59), with a transverse pin (63) extending parallel to the axis of the screw (40') and of which the ends penetrate into a longitudinal groove (64') of the housing (37) of the cassette (35).

**Patentansprüche**

1. Zusammenbauvorrichtung für einen Kegelschaft, insbesondere für 7/24 Kegelschäfte verwendet für anbauvorrichtungen, Werkzeughalter und Werkzeuge, aufgebaut aus einem Aufnahmekegel (1) in einer Spindel (2), aus einem am Aufnahmekegel (1) zentrierten Vorderteil (3), an dem in Richtung auf die Spindel (2) ein Flansch (4) vorgesehen ist, sowie aus einem Zugelement (5) zur Verbindung von Aufnahmekegel (1) und Vorderteil (3), dadurch gekennzeichnet, daß sie eine elastische Druckeinrichtung (6) für den Aufnahmekegel (1) in der Spindel (2) in Verriegelungsposition, welche Druckeinrichtung (6) unter Druck zwischen Aufnahmekegel (1) und Vorderteil (3) eingebaut ist, und ein Mittel (7) zur Einstellung besagter Druckeinrichtung (6) aufweist.

2. Zusammenbauvorrichtung nach Anspruch 1, dadurch gekennzeichnet, daß der Aufnahmekegel (1) eine gegenüber bekannten Kegeln um einige Zehntelmillimeter verringerte Länge der zwei Seiten besitzt und mit zwei konzentrischen Bohrungen (8 und 9) zur Zentrierung des Vorderteils (3) einer Bohrung (10), deren Durchmesser kleiner ist als der der Bohrung (9), versehen ist und durch die elastische Druckeinrichtung (6) in seiner Lage gehalten ist, die sich am der Bohrung (9) abgewandten Ende auf dem Mittel (7) zur Einstellung abstützt, das am Grund besagter Bohrung (10) gelegen ist, wobei die letztere (10) durch eine Bohrung (11) verlängert ist, die sich am vom Aufnahmekegel (1) abgewandten Ende öffnet und zur Führung des Zugelements (5) dient, das in diesem Bereich mit einem Dichtring (26) ausgestattet ist und das sich auf der Rückseite des Aufnahmekegels (1) mittels einer Schulter (27) abstützt, und daß die dem Kragen (4) des Vorderteils (3) zugewandte Seite des Aufnahmekegels (1) mit einer kreisförmigen Rille (15) zur Lagerung eines Dichtringes (16) versehen ist.

3. Zusammenbauvorrichtung nach einem der Ansprüche 1 und 2, dadurch gekennzeichnet, daß das Vorderteil (3), das in Richtung auf die Spindel (2) mit dem Flansch (4) versehen ist, im Aufnahmekegel (1) mittels zwei konzentrischen zylindrischen Abschnitten (8' und 9') zentriert ist, indem es diesbezüglich in die korrespondierenden Bohrungen (8 und 9) des Aufnahmekegels (1) eindringt, und in besagtem Aufnahmekegel (1) mittels des Zugelements (5) gegen die Wirkung der elastischen Druckeinrichtung (6) gespannt ist und daß der Kragen (4) ungefähr in seiner Mitte mit einer peripheren V-Rille (12) zur Aufnahme des Arms einer Werkzeugwechseleinrichtung ausgerüstet ist.

4. Zusammenbauvorrichtung nach einem der vorhergehenden Ansprüche, dadurch gekennzeichnet, daß der zylindrische Abschnitt (9') des Vorderteils (3) dazu mit zwei Aufnahmerillen (17 und 18) ausgestattet ist, einenteils für einen Keil oder Paßstift (19) zur Rotationsverbindung zwischen Aufnahmekegel (1) und Vorderteil (3), indem er (19) in einer mit der Bohrung (9') korrespondierenden Rille des Aufnahmekegels eintaucht, und andererseits für eine Halteschraube (20) für das Vorderteil (3).

5. Zusammenbauvorrichtung nach einem der Ansprüche 1 und 2, dadurch gekennzeichnet, daß die elastische Druckeinrichtung (6), die in der Bohrung (10) gelegen ist, vorteilhafterweise durch eine Schichtung von Belleville-Ringen, durch eine Schraubenfeder, durch mehrere sich in einer Ringkammer parallel erstreckende Federn, wobei die Ringkammer durch die Bohrung (10) und das Zugelement (5) begrenzt wird, oder durch hydraulische, pneumatische oder jede andere elastische Einrichtung verwirklicht wird, wobei die Kraft des Druckes dieser Druckeinrichtung (6) geregelt wird mit Hilfe des Mittels (7), das vorteilhafterweise in Form einer Gewindemuffe ausgebildet ist, die mit einem Gewinde am Grund der Bohrung (10) zusammenarbeitet, wobei diese Muffe in Wartungsposition mittels einer Paßschraube (21) blockiert ist.

6. Zusammenbauvorrichtung nach einem der Ansprüche 1 bis 4, dadurch gekennzeichnet, daß das Vorderteil (3) mit zwei konzentrischen Bohrungen (22 und 23) ausgestattet ist, von denen eine (23) mit einem Gewinde versehen ist für die Aufnahme des mit Gewinde versehenen Endes des Zugelementes (5) und die andere (22) gewindelos ist und mit einem Dichtring (24) zusammenarbeitet, der in einer entsprechenden kreisförmigen Rille des besagten Zugelementes (5) gelegen ist, das in Wartungsstellung mit Hilfe einer radialen Schraube (25) blockiert ist, die das Vorderteil (3) im Bereich einer der Rillen (13) zur Aufnahme der Mitnehmer (14) der Spindel (2) durchgreift.

7. Zusammenbauvorrichtung nach einem der Ansprüche 1 bis 3,5 und 6, dadurch gekennzeichnet, daß das Zugelement (5) an seinem hinteren Ende statt mit einem Greifprofil (28) mit einem zylindrischen Abschnitt ausgestattet ist, der für eine geschraubte Zugfixierung mit einem Außengewinde versehen ist.

8. Zusammenbauvorrichtung nach einem der Ansprüche 1 bis 3, dadurch gekennzeichnet, daß der zylindrische Abschnitt (9') des Vorderteils (3) mit einer kreisförmigen Rille (33) ausgestattet ist, die mit der Halteschraube (20) für das Vorderteil (3) im Aufnahmekegel (1) zusammenwirkt.

9. Zusammenbauvorrichtung nach einem der Ansprüche 2 und 3, dadurch gekennzeichnet, daß die Bohrung (8) des Aufnahmekegels (1) mit einer zylindrischen Rille zur Lagerung eines zusätzlichen Dichtrings (34) ausgestattet ist.

10. Zusammenbauvorrichtung nach einem der Ansprüche 1 bis 9, dadurch gekennzeichnet, daß sie durch ihren Aufnahmekegel in einer Befestigungskasette (35) befestigt ist unter Abstützung ihres Kragens (4) gegen die Vorderseite besagter Befestigungskasette (35), die im Bereich des Zugelementes (5) mit Mitteln (36) zum Greifen und Spannen des Endes des besagten Zugelementes (5) ausgestattet ist, das in einer Blindlage (37) befestigt ist, in der sie sich senkrecht oder im spitzen Winkel zur Achse des Vorderteils (3) und des Aufnahmekegels (1) erstreckt, und das nahe seines offenen Endes mit einem elastischen Ring (46) ausgestattet ist.

11. Zusammenbauvorrichtung nach Anspruch 10, dadurch gekennzeichnet, daß die Mittel (36) zun Greifen und Spannen des Zugelementes (5) aufgebaut sind aus zwei Kolben (38 und 39), die auf verschiebliche Weise in ihrer Lagerung befestigt sind und in Nachbarschaft oder auf Entfernung mittels einer Schraube (40) mit invertierten Gewinde mit Begrenzung der Verschiebung mittels des elastischjen Rings (46) verschiebbar sind, wobei die Zwei Kolben (38 und 39 ) zum einen Teil auf ihrer dem Aufnahmekegel (1) zugewandten Seite je eine Aufnahme (41,42) aufweisen, die zur Betätigung im Greifprofil (28) des Zugelementes (5) bestimmt ist, und zum andern Teil auf der vom Zugeelement (5) abgewandten Seite zwischen sich eine Aussparung formen zur Aufnahme einer Auswerfervorrichtung (44) der Zusammenbauvorrichtung für den Kegelschaft, wobei sich diese Auswerfervorrichtung am einen Ende um die Schraube (40) herum und am anderen Ende in eine Bohrung (45) erstreckt, die auf der Rückseite der Befestigungs-Kassette (35) geöffnet ist, in der Achse des Aufnahmekegels (1) und des Vorderteils (3).

12. Zusammenbauvorrichtung nach Anspruch 11, dadurch gekennzeichnet, daß die Verschiebung der Kolben (38 und 39) in Nachbarschaft und auf Entfernung in der Lagerung (37) mittels einer einfachen Schraube verwirklicht wird, die mit einem Innnengewinde eines der Kolben zusammenarbeitet und sich über ihren Kopf in einer Einschließung des anderen Kolbens (39) abstützt, formend einen elastischen Ring, der ein Widerlager für das freie Ende des besagten Kopfes in der Einschließung bildet.

13. Zusammenbauvorrichtung nach Anspruch 11, dadurch gekennzeichnet, daß die Auswerfervorrichtung (44) an ihrem die Schraube (40) umgebenden Ende einen viereckigen Abschnitt (47) aufweist, der mit einer länglichen durchgehenden Bohrung (48) zur Lagerung der Schraube (40) ausgestattet und verbunden ist mit einem zylindrischen Abschnitt (49) zur Führung in der Bohrung (45) der Befestigungskasette (35), wobei dieser zylindrische Abschnitt (49) einenteils verlängert ist durch einen Schaft eines zylindrischen Abschnitts (50), der eine Öffnung für die Bohrung (45) schafft, und in diesem Bereich mit einem elastischen Ring (51) ausgestattet ist und anderenteils durch eine Feder (52) oder eine Reihe von Belleville-Ringen beaufschlagt ist, wobei sie an ihrem anderen Ende gegen einen Stützring (53) wirken, der mittels eines elastischen Rings (54) am Ende der Bohrung (45) gehalten ist.

14. Zusammenbauvorrichtung nach Anspruch 13, dadurch gekennzeichnet, daß der viereckige Abschnitt (47) der Auswerfervorrichtung (44) auf zwei gegenüberliegenden Rändern Querschultern (55) aufweist, die sich auf den Schrägen einer Aufnahme (56) abstützen, die auf eine Weise geneigt ist, die einem der Kolben (38 oder 39) entspricht.

15. Zusammenbauvorrichtung nach einem der Ansprüche 10 und 11, dadurch gekennzeichnet, daß der Kolben (39') des Mittels zum Greifen (36) ohne eine geneigte Aufnahme ausgerüstet ist und die Auswerfervorrichtung aufgebaut ist aus einem Kolben (57), der in eine Aussparung (43') eindringt, die zwischen den Kolben (38' und 39') bestimmt ist und mit einem länglichen Loch (58) für den Durchgang der Schraube (40') ausgerüstet ist zur Betätigung der Kolben (38' und 39'), und aus einer Schraube (59) zur Betätigung des Kolbens (57), der mit einem Gewinde der Befestigungskasette (35) zusammenarbeitet, die ausgerichtet ist in der Achse des Aufnahmekegels (1) und zur Verschiebung mit einem Abschnitt (60) verringerten Durchmessers des Kolbens (57) mittels einer Kugellaufbahn (61) verbunden ist, die in einer kreisförmigen Rille (61') gelegen ist, wobei besagte Schraube (59) mit einem Innensechskant (62) versehen ist und der Kolben nahe seines mit der Schraube (59) verbundenen Endes mit einem quer angeordneten Stift (63) ausgestattet ist, der sich parallel zur Achse der Schraube (40') erstreckt und dessen Enden in einer Längsrille (64) der Lagerung (37) der Befestigungskassette (35) eindringen.

Fig-1

Fig.2

1

27

5

a

Fig.3

3

Fig.4

3

Fig. 5

3

Fig. 6

3

Fig. 7

3

Fig.8

EP 0 317 682 B1

Fig. 9

Fig. 10

Fig. 11

# Fig.12

# Fig.13